# EUROPÄISCHE PATENTSCHRIFT

(11) **EP 1 816 235 B1**
(45) Veröffentlichungstag und Bekanntmachung des Hinweises auf die Patenterteilung: **16.03.2011**
(21) Anmeldenummer: 06009567.6
(22) Anmeldetag: 09.05.2006
(51) Int. Cl.: C23C 24/04, B23P 6/04

(54) **Verfahren zum Ausbessern von Fehlstellen in Gussteilen**
Method of repairing defects in castings
Procédé de réparation de défauts dans des pièces coulées

(30) Priorität: 26.01.2006 DE 102006003818
(43) Veröffentlichungstag der Anmeldung: 08.08.2007
(73) Patentinhaber: Linde AG, 80331 München (DE)
(72) Erfinder: Heinrich, Peter, 82110 Germering (DE); Krömmer, Werner, 84034 Landshut (DE)

(56) Entgegenhaltungen:
- US-A- 4 599 781
- US-A1- 2004 265 163
- US-B1- 6 283 386
- PATENT ABSTRACTS OF JAPAN Bd. 2003, Nr. 12, 5. Dezember 2003 (2003-12-05) -& JP 2005 305480 A (NISSAN MOTOR CO LTD), 4. November 2005 (2005-11-04)
- PATENT ABSTRACTS OF JAPAN Bd. 012, Nr. 471 (M-773), 9. Dezember 1988 (1988-12-09) -& JP 63 194859 A (MITSUBISHI HEAVY IND LTD), 12. August 1988 (1988-08-12)
- T.H. VAN STEENKISTE ET AL.: "Kinetic spray coatings" SURFACE AND COATINGS TECHNOLOGY, 1999, Seiten 62-71, XP002383467

## Beschreibung

Die Erfindung betrifft ein Verfahren zum Ausbessern von Fehlstellen, insbesondere von Rissen, Poren und Kerben, in Aluminium-Silizium-Gussteilen sowie einen Motorblock aus Aluminium-Silizium-Guss mit mindestens einer Ausbesserung einer Fehlstelle.

In Gussteilen aus Aluminium-Silizium-Guss finden sich oftmals Risse, Poren und Kerben. Diese Risse, Poren und Kerben entstehen bei dem Gießen. Mit Rissen und Kerben behaftete Gussteile sind jedoch von mangelhafter Qualität und müssen entweder aussortiert oder nachbearbeitet werden. Bei der Nachbearbeitung wird das fehlende Material unter Verwendung der Schweißtechnik eingebracht. Kleinere Risse und Kerben werden dabei durch den beim Schweißen verwendeten Zusatzwerkstoff verfüllt. Bei größeren Fehlstellen wird zuerst ein Keil oder Stift eingeschlagen, welcher anschließend mit dem Gussteil verschweißt wird. Die Behandlung der Aluminium-Silizium-Gussteile mit Schweißtechnik bringt jedoch neue Probleme mit sich, da beim Schweißen in die Umgebung der Schweißstelle Wärme eingebracht wird. Dies führt zu einer thermischen Belastung der Gussteile. Aufgrund der thermischen Belastung wiederum bilden sich leicht neue Risse und Kerben, welche in einem weiteren Arbeitsschritt wieder verschlossen werden müssen. Dieses mehrstufige Verfahren birgt viele Fehlerquellen in sich, welche vor allem bei der Verfugung der Fehlstellen und bei der Kontrolle der ausgebesserten Stellen auftreten. Weiterhin ist in zahlreichen Fällen nach dem Verschließen der Fehlstellen auch noch ein Entfernen von überschüssigem Füllmaterial vorzunehmen. Zusammenfassend ist deshalb festzustellen, dass dieses Verfahren sehr umständlich anzuwenden und damit sehr unwirtschaftlich ist. Problematisch ist weiterhin, dass für die Ausbesserung ein anderer Werkstoff verwendet werden muss. So ist in der Regel beim Schweißen Zusatzmaterial in Form eines Schweißdrahtes notwendig, wodurch ein weiterer Werkstoff in Verwendung kommt. An Grenzflächen verschiedener Materialien treten jedoch metallurgische Probleme auf, da verschiedener Materialien auch unterschiedliche Elektronegativitäten aufweisen. Die metallurgischen Probleme zeigen sich erst im Laufe der Zeit und führen zu Bruchstellen und vorzeitigem Verschleiß mit der Folge, dass Reparaturen anfallen beziehungsweise sich die Lebensdauer der Bauteile verkürzt. Besonders ausgeprägt zeigen sich diese Probleme bei Motorblöcken aus Aluminium-Silizium-Guss, da Motorblöcke im Betrieb sehr hohen mechanischen und thermischen Belastungen ausgesetzt sind. Vorhanden sind diese Probleme aber auch bei anderen Aluminium-Silizium-Gussteilen wie beispielsweise Kühlerteile oder Fahrwerkskomponenten und auch bei Wärmetauschern.

Ferner ist es bekannt, auf Werkstoffe unterschiedlichster Art Beschichtungen mittels thermischen Spritzens aufzubringen. Bekannte Verfahren hierfür sind beispielsweise Flammspritzen, Lichtbogenspritzen, Plasmaspritzen oder Hochgeschwindigkeits-Flammspritzen. In jüngerer Zeit wurde ein Verfahren entwickelt, das sog. Kaltgasspritzen, bei welchem die Spritzpartikel in einem "kalten" Trägergas auf hohe Geschwindigkeiten beschleunigt werden. Die Beschichtung wird durch das Auftreffen der Partikel auf dem Werkstück mit hoher kinetischer Energie gebildet. Beim Aufprall bilden die Partikel, die in dem "kalten" Trägergas nicht schmelzen, eine dichte und festhaftende Schicht, wobei plastische Verformung und daraus resultierende lokale Wärmefreigabe für Kohäsion und Haftung der Spritzschicht auf dem Werkstück sorgen. Eine Oxidation und/oder Phasenumwandlungen des Beschichtungswerkstoffes lassen sich somit weitgehend vermeiden. Die Spritzpartikel werden als Pulver zugegeben, wobei das verwendete Pulver meist eine Partikelgröße von 1 bis 100 µm aufweist. Möglich ist es jedoch auch, Pulver mit deutlich größeren Partikeln zu verwenden. Die hohe kinetische Energie erhalten die Spritzpartikel bei der Entspannung des Trägergases. Nach der Injektion der Spritzpartikel in den Gasstrahl wird das Gas in einer Düse entspannt, wobei Gas und Spritzpartikel auf Geschwindigkeiten oberhalb der Schallgeschwindigkeit beschleunigt werden. Ein solches Verfahren und eine Vorrichtung zum Kaltgasspritzen sind in der europäischen Patentschrift EP 0 484 533 B1 im Einzelnen beschrieben. Als Düse wird beim Kaltgasspritzen in der Regel eine de Laval'sche Düse benutzt. Das Trägergas wird zusammen mit den Spritzpartikeln in der Lavaldüse entspannt. Während der Druck in der Lavaldüse abfällt, steigt die Trägergasgeschwindigkeit auf Werte bis zu 3000 m/s und die Partikelgeschwindigkeit auf Werte bis zu 1400 m/s. Lavaldüsen bestehen aus einem konvergenten und einem sich in Stromrichtung daran anschließenden divergenten Abschnitt. Als Trägergas wird meist Stickstoff verwendet, aber auch Argon, Helium und Mischungen aus diesen drei Gasen werden eingesetzt. Von Vorteil ist eine Erwärmung des Trägergases vor der Entspannung und damit eine Erwärmung der Spritzpartikel, wobei ein Schmelzen der Spritzpartikel ausgeschlossen werden muss. Die Endgeschwindigkeit der Spritzpartikel, die von Düse, dem Material der Spritzpartikel, der Temperatur der Spritzpartikel und der Trägergasart abhängt, liegt in nahezu allen Fällen bei mindestens 500 m/s. Meist werden jedoch mehr als 650 m/s und oft sogar mehr als 800 m/s erreicht.

Der Erfindung liegt daher die Aufgabe zugrunde, ein Verfahren anzugeben, welches das Verschließen von Fehlstellen, insbesondere von Rissen, Poren und Kerben in Gussteilen auf einfache Weise ermöglicht und das Entstehen neuer Fehlstellen vermeidet.

Die Aufgabe wird erfindungsgemäß dadurch gelöst, dass die Fehlstellen mittels Kaltgasspritzen aufgefüllt werden. Der Erfindung liegt somit die wesentliche Eigenschaft des Kaltgasspritzens zugrunde, dass beim Kaltgasspritzen das Spritzmaterial, welches als Zusatzwerkstoff für die Füllung der Fehlstellen sorgt, aufgrund einer plastischen Verformung an dem Grundwerkstück haftet. Eine thermische Belastung des Aluminium-Silizium-Gussteils wird somit vermieden. Entfällt die thermische Belastung des Gussteils wird das Entstehen von neuen, auf eine lokale Wärmezufuhr zurückzuführenden Fehlstellen unterbunden. Mit dem erfindungsgemäßen Verfahren werden deshalb die Risse, Poren und Kerben zuverlässig verschlossen und eine weitere Kontrolle ist nicht notwendig. Das Ausbessern der Gussteile kann nun auch bei großen Rissen, Poren und Kerben, bei welchen bisher ein Einschlagen eines Keils oder Stiftes unabdingbar war, in einem einzigen Arbeitsschritt erfolgen, weil mit dem erfindungsgemäßen Verfahren das gesamte Füllmaterial durch die Spritzpartikel in die Fehlstelle eingebracht werden kann. In manchen Fällen kann es jedoch trotzdem von Vorteil sein, zuerst einen Keil oder Stift in die Fehlstelle zu treiben und anschließend diesen mittels Kaltgasspritzen mit dem Gussteil zu verbinden. Ferner ist das Kaltgasspritzen ein Arbeitsverfahren, welches eine sehr präzise Füllung der Fehlstellen ermöglicht. Ein Nachbearbeiten in Form von Entfernen von überschüssigem Füllmaterial oder in Form einer Verschönerung der Oberfläche ist deshalb in den meisten Fällen überflüssig. Lediglich bei Ausbesserungen in Funktionsflächen ist in manchen Fällen ein Nachbearbeiten erforderlich. Ein weiterer Vorteil der Erfindung liegt darin, dass für die Kaltgaspritzpartikel dasselbe oder ein sehr ähnliches Material gewählt werden kann, aus welchem das Gussteil besteht. Durch das Kaltgasspritzen entsteht folglich eine Verbindung aus gleichen oder artgleichen Materialien, wodurch metallurgische Probleme vermieden werden. Mit dem erfindungsgemäßen Verfahren ist es somit möglich, Aluminium-Silizium-Gussteile auf einfache Art und Weise auszubessern und die ausgebesserten Gussteile als qualitativ einwandfreie Bauteile einzusetzen.

In vorteilhafter Weiterbildung der Erfindung werden Kaltgas-Spritzpartikel aus einer Aluminium-Silizium-Legierung verwendet. Da auch das Gussteil aus einer Aluminium-Silizium-Legierung ist, werden durch das erfindungsgemäße Verfahren metallurgische Probleme nahezu völlig ausgeschlossen. Dies ist darauf zurückzuführen, dass auch nach dem Ausbessern nur gleiche oder zumindest artgleiche Materialien aneinander grenzen. Möglich ist es jedoch auch, dass die Fehlstellen mit Kaltgasspritzpartikel aus Aluminium, aus anderen Aluminiumlegierungen, aus Kupfer oder Keramikstoffen aufgefüllt werden.

Weiterhin ist es von Vorteil Kaltgas-Spritzpartikel mit einer Größe von 1 bis zu 300 µm, vorzugsweise von bis zu 100 µm, besonders bevorzugt von bis zu 50 µm zu verwenden. Mit Spritzpartikeln in dieser Größe lassen sich die Risse, Poren und Kerben besonders präzise füllen

In vorteilhafter Ausgestaltung werden Aluminium-Silizium-Gussteile aus AlSi 17 ausgebessert.

Mit besonderem Vorteil werden mit dem erfindungsgemäßen Verfahren Motorblöcke ausgebessert. Mit dem erfindungsgemäßen Verfahren ist es somit möglich, Motorblöcke aus Aluminium-Silizium-Guss auf sehr einfache Weise auszubessern, wobei auch die ausgebesserten Motorblöcke mängelfrei sind. Mit dem erfindungsgemäßen Verfahren ist es ferner möglich, auch andere Bauteile aus Aluminium-Silizium-Guss vorteilhaft auszubessern, wie beispielsweise Kühlerteile und Fahrwerkskomponenten (insbesondere Achsträger) und auch Wärmetauscher.

Da der Haftmechanismus der Ausbesserung eine auf plastischer Verformung beruhende Verklammerung ist, entfällt eine thermische Belastung des Gussteils. Da Motorblöcke sehr hohen Belastungen ausgesetzt sind, müssen auch die Ausbesserungen sehr belastbar sein. Die mittels Kaltgasspritzen ausgeführten Ausbesserungen weisen diese Eigenschaft in hervorragender Weise auf. Weiterhin finden sich auch im ausgebesserten Motorblock keine neuen, auf die thermische Belastung während der Auffüllung zurückzuführende Fehlstellen oder Spannungen. Bestehen Auffüllung und Motorblock aus dem gleichen oder zumindest aus einem artgleichen Material stellen sich beim Einsatz während der gesamten Betriebszeit des Motorblocks normalerweise keinerlei metallurgische Probleme ein.

Folglich ist es von Vorteil, dass auch die Ausbesserung aus einer Aluminium-Silizium-Legierung ist. Eine Ausbesserung aus Aluminium oder einer anderen Aluminiumlegierung ist ebenfalls möglich. Denkbar ist ferner eine Auffüllung mit Kupfer oder Keramikstoffen.

In vorteilhafter Ausgestaltung ist der Motorblock aus AlSi 17.

Durch das erfindungsgemäße Auffüllen von Fehlstellen in Aluminium-Silizium-Gussteilen mittels Kaltgasspritzen werden qualitativ hochwertige Ausbesserungen auf einfache Weise ermöglicht.

## Patentansprüche

1. Verfahren zum Ausbessern von Fehlstellen, insbesondere von Rissen, Poren und Kerben in Aluminium-Silizium-Gussteilen, **dadurch gekennzeichnet, dass** die Fehlstellen mittels Kaltgasspritzen aufgefüllt werden.

2. Verfahren nach Anspruch 1, **dadurch gekennzeichnet, dass** Kaltgas-Spritzpartikel aus einer Aluminium-Silizium-Legierung verwendet werden.

3. Verfahren nach Anspruch 1 oder 2, **dadurch gekennzeichnet, dass** Kaltgas-Spritzpartikel mit einer Größe von 1 bis zu 300 µm, vorzugsweise von bis zu 100 µm, besonders bevorzugt von bis zu 50 µm verwendet werden.

4. Verfahren nach einem der Ansprüche 1 bis 3, **dadurch gekennzeichnet, dass** Aluminium-Silizium-Gussteile aus AISi 17 ausgebessert werden.

5. Verfahren nach einem der Ansprüche 1 bis 4, **dadurch gekennzeichnet, dass** Motorblöcke ausgebessert werden.

## Claims

1. Method for repairing defects, in particular cracks, pores and notches, in aluminium/silicon castings, **characterized in that** the defects are filled up by means of cold-gas injection.

2. Method according to Claim 1, **characterized in that** cold-gas injection particles from an aluminium/silicon alloy are used.

3. Method according to Claim 1 or 2, **characterized in that** cold-gas injection particles with a size of 1 to 300 µm, preferably of up to 100 µm, especially preferably of up to 50 µm, are used.

4. Method according to one of Claims 1 to 3, **characterized in that** aluminium/silicon castings consisting of AlSi 17 are repaired.

5. Method according to one of Claims 1 to 4, **characterized in that** engine blocks are repaired.

## Revendications

1. Procédé d'amélioration de défauts, en particulier de fissures, de pores et d'entailles, dans des pièces coulées en aluminium et silicium,
**caractérisé en ce que**
les défauts sont remplis par projection au gaz froid. ,

2. Procédé selon la revendication 1, **caractérisé en ce que** les particules projetées au gaz froid qu'il utilise sont constituées d'un alliage d'aluminium et de silicium.

3. Procédé selon les revendications 1 ou 2, **caractérisé en ce que** les particules projetées au gaz froid qu'il utilise ont une taille de 1 à 300 µm, de préférence de jusque 100 µm et de façon particulièrement préférable de jusque 50 µm.

4. Procédé selon l'une des revendications 1 à 3, **caractérisé en ce qu'**il améliore des pièces coulées en aluminium et silicium d'AlSi 17.

5. Procédé selon l'une des revendications 1 à 4, **caractérisé en ce qu'**il améliore des blocs de moteurs.
